(19) **Europäisches Patentamt / European Patent Office / Office européen des brevets**

(11) **EP 3 767 328 B1**

(12) **FASCICULE DE BREVET EUROPEEN**

(45) Date de publication et mention
de la délivrance du brevet:
**27.03.2024 Bulletin 2024/13**

(21) Numéro de dépôt: **20182638.5**

(22) Date de dépôt: **26.06.2020**

(51) Classification Internationale des Brevets (IPC):
**G01S 7/497** (2006.01)    **G01S 17/894** (2020.01)
**G01S 17/931** (2020.01)    **G01S 17/86** (2020.01)
**G01S 17/87** (2020.01)    **G01S 13/86** (2006.01)
**G01S 13/931** (2020.01)

(52) Classification Coopérative des Brevets (CPC):
**G01S 7/497; G01S 13/865; G01S 17/86;**
**G01S 17/87; G01S 17/894; G01S 17/931;**
G01S 13/867; G01S 13/931

(54) **PROCÉDÉ DE VÉRIFICATION DE L'INTÉGRITÉ DE DONNÉES LIDAR**

VERFAHREN ZUR ÜBERPRÜFUNG DER INTEGRITÄT VON LIDAR-DATEN

METHOD FOR VERIFYING THE INTEGRITY OF LIDAR DATA

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **19.07.2019 FR 1908215**

(43) Date de publication de la demande:
**20.01.2021 Bulletin 2021/03**

(73) Titulaire: **Renault s.a.s**
**92100 Boulogne Billancourt (FR)**

(72) Inventeurs:
• **NEUSSER, Ariane**
**78000 Versailles (FR)**

• **MITTET, Marie-Anne**
**91120 Palaiseau (FR)**
• **CAYOL, Olivier**
**78000 Versailles (FR)**

(74) Mandataire: **Renault Group**
**Renault s.a.s.**
**1 avenue du Golf**
**FR TCR AVA 055**
**78084 Guyancourt Cedex (FR)**

(56) Documents cités:
**US-A1- 2019 196 481**

**Description**

La présente invention concerne le domaine de la conduite autonome, c'est-à-dire des véhicules automobiles sans conducteur ou dans lesquels le conducteur peut être libéré au moins temporairement de toute tâche de conduite. L'invention s'applique notamment, mais pas exclusivement, aux véhicules particuliers.

La présente invention constitue un perfectionnement de l'invention faisant l'objet de la demande FR1852188 déposée par la demanderesse. Elle vise notamment à confirmer ou infirmer, à partir d'un nuage de points issus d'un capteur de type lidar apparament incohérent des données de cartographie, les résultats d'une étape de détection d'objets ou d'obstacles par ce même capteur lidar conjointement avec d'autres capteurs, comme des caméras ou des radars.

En effet, un préalable à la conduite autonome est la connaissance de l'environnement général du véhicule, qu'il s'agisse de la route, du marquage au sol, des panneaux de signalisation, ou encore des autres véhicules ou des piétons. A cette fin, on utilise couramment des capteurs de perception, non seulement de type lidar, mais également de type radar ou caméra. Cependant, ceux-ci peuvent souffrir d'erreur de détection, ou pire de non détection. Dans le but surmonter ces difficultés, il est connu de combiner ou « fusionner » des données issues de caméras, de radars ou encore de lidars, dans le but de compenser les erreurs de détection. Malgré cela, il subsiste encore de nombreuses situations problématiques, comme par exemple celle illustrée par la figure 1, déjà incluse dans la demande FR1852188, où un véhicule de service portant un panneau de signalisation stationné sur le bas-côté d'une autoroute est ignoré au motif qu'il n'est détecté que par les lidars, minoritaires en nombre, pas par les caméras et les radars. Ainsi, la diversification peut créer la confusion, voire même une apparente incohérence : comment interpréter l'incohérence entre les données issues du lidar (qui détectent un obstacle) et les autres capteurs (qui ne détectent rien)? Y a-t-il un obstacle réel sur la route non détecté par le processus de fusion ? Ou est-ce une fausse alerte due à un dysfonctionnement des lidars ? En tous cas, la détection est ratée (« Missed object » selon la terminologie anglo-saxonne)..

La demande FR1852188 se propose de résoudre ce problème. Pour cela, elle divulgue un procédé innovant permettant de concilier, dans de nombreux cas où les données brutes des lidars sont cohérentes des données de cartographie, les résultats de détection en sortie des différents types de capteurs, que ceux-ci se confirment ou qu'ils se contredisent. Pour cela, elle s'appuie notamment sur une mesure de la cohérence entre les données de cartographie et les données brutes des lidars (appelées couramment « nuages de points»). En effet, la fusion de données utilise les objets détectés issus des traitements effectués sur ces nuages de points, qui ne sont pas pris en compte directement dans le processus de fusion pour établir les détections d'obstacles. Toutefois, la demande FR1852188 ne décrit que rapidement comment faire dans les cas où les données brutes des lidars sont incohérentes des données de cartographie. Il s'agit là d'un inconvénient auquel la présente invention se propose de pallier.

Le document KR20160128077 tente de traiter des cas d'incohérence entre des données lidar et des données de cartographie par une étape de calibrage visant en fait à recaler le capteur sur la cartographie (pour palier une erreur de localisation du véhicule par exemple). Mais il ne traite pas de cas d'objets non détectés qui masqueraient une zone et y généreraient de l'incohérence, un recalage étant inopérant dans ce cas là. Ainsi, en appliquant la solution de KR20160128077, on rate définitivement les objets non détectés et on risque de tenter un recalage alors que ce n'est pas nécessaire. Il s'agit là encore d'un problème que la présente invention se propose de résoudre. Le document US2019/196481A1 décrit un procédé de navigation autonome pour un véhicule autonome, qui ne résout pas tous les inconvénients précités.

L'invention a notamment pour but de diminuer le nombre d'objets manqués et de diminuer les fausses détections, ceci en résolvant a *posteriori* les incohérences entre le nuage de points lidars et les données de cartographie. A cet effet, l'invention a pour objet un procédé pour diagnostiquer un dysfonctionnement d'un capteur lidar. Il comporte une étape de comparaison de données de détections d'objets fournies par le capteur lidar dans une zone géographique avec des données cartographiques correspondant à ladite zone. Si les données de détections et les données cartographiques sont incohérentes, alors le procédé comporte en outre une étape de vérification qu'un objet a été détecté ou pas dans ladite zone. Si aucun objet n'est détecté dans la zone, alors le procédé comporte en outre une étape d'assignation d'un indice de confiance aux données lidar, comportant des sous étapes d'identification des points incohérents dans la zone, de quantification de l'incohérence pour chacun de ces points et, en cas d'incohérence au-delà d'un seuil prédéfini, de diminution de l'indice de confiance sur les données lidar.

Dans la présente demande, on entend par « incohérence entre les données de détection et les données de cartographie » le fait que des objets détectés par le capteur ne sont pas représentés dans la cartographie ou que des objets représentés dans la cartographie ne sont pas détectés par le capteur. En particulier, dans la présente demande les lignes horizontales de marquage au sol sont considérées comme des objets susceptibles d'être cartographiés et détectés.

L'invention a également pour objet un système comportant des moyens matériels et logiciels pour mettre en oeuvre un tel procédé, ainsi qu'un véhicule automobile comportant un tel système.

La présente invention a encore pour principal avantage son faible coût, puisqu'elle utilise des capteurs et des calculateurs déjà embarqués dans la plupart des véhicules actuels.

D'autres caractéristiques et avantages de l'invention apparaîtront à l'aide de la description qui suit faite en regard de dessins annexés.

La figure 1 illustre, par une capture d'écran, un exemple de procédé selon l'art antérieur.

Les figures 2 à 5 illustrent, par des schémas, des diagrammes et des captures d'écran, un exemple de réalisation selon l'invention faisant déjà l'objet de la demande FR1852188.

Les figures 6 à 10 et 11, 12 et 13 illustrent, par des schémas et des diagrammes, un exemple de réalisation selon la présente invention.

Le lidar est une technologie de pointe qui permet de représenter précisément l'environnement qui entoure le capteur. Celui-ci permet non seulement de mesurer des distances, mais également de mesurer le caractère réfléchissant des objets qui l'entourent. Ainsi, il est possible d'obtenir un nuage de points 3D représentant l'environnement. Pour chacun des points, on pourra également associer une valeur de réflectivité. L'invention repose sur une comparaison entre ce nuage de points et une « signature » de ce qui est attendu sur la route, cette signature étant déduite d'une carte 3D mémorisée dans le véhicule. La carte 3D utilisée comporte des informations sur l'infrastructure (lignes, barrières, panneaux, etc...) mais est vide de tout autre objet.

Afin de pouvoir effectuer cette comparaison, il est nécessaire de localiser précisément le véhicule dans la carte 3D que l'on souhaite exploiter. Une fois localisé, il est possible de comparer la mesure effectuée avec la signature de la route attendue. La signature de la route attendue est éventuellement complétée par le ou les objets détectés par les caméras et/ou les radars. Si le nuage de point issu du lidar correspond parfaitement à la signature, alors il y a cohérence et on peut affirmer avec certitude qu'il n'y a pas d'obstacles devant le véhicule sur la route (notamment pas d'objet manqué). Par contre, dès lors que le nuage de points ne correspond pas à la signature, alors il y a incohérence et risque qu'un obstacle devant le véhicule ait été manqué. Cependant, il est important de noter qu'il sera presque impossible d'obtenir une correspondance parfaite. En effet, plusieurs phénomènes peuvent impacter la mesure. On distinguera plusieurs sources d'erreurs : l'imprécision de la localisation du véhicule, ainsi que les effets de roulis et de tangage qu'il subit, les erreurs présentes dans les cartes utilisées, ou encore un dysfonctionnement du lidar. La présente invention propose également de traiter ces différentes sources d'erreur. Dans le présent mode de réalisation, les spécifications envisagées pour des performances satisfaisantes sont les suivantes.

La taille du plus petit objet à détecter est de quelques centimètres : cela représente la taille à partir de laquelle le pneu du véhicule peut subir un dommage en cas d'impact.

Le champ de vision est ouvert à 180° vers l'avant du véhicule .

Le champ de vision s'étend latéralement non seulement au-delà des bandes latérales délimitant les voies, mais également jusqu'à 50 mètres au-delà des bandes d'arrêt d'urgence et des barrières de sécurité, (on doit pouvoir détecter un piéton sur le bas-côté de la chaussée).

Le champ de vision s'étend longitudinalement au-delà de 200 mètres (marge d'arrêt du véhicule).

Le champ de vision s'étend à 25 mètres en hauteur (ce qui correspond à une hauteur de 5 mètres pour passer au-dessus d'un camion, suivie d'une pente à 10% sur 200 mètres).

Compte tenu de l'ensemble de ces facteurs, il convient de définir un niveau de corrélation, c'est-à-dire la mise au point d'une valeur qui représente le niveau de corrélation entre la carte 3D et les données issues du lidar. Si ces deux informations corrèlent parfaitement, alors on a un niveau de corrélation égal à 1. A l'inverse, si ces deux sources de données ne corrèlent pas du tout, on aura un niveau de corrélation égal à 0.

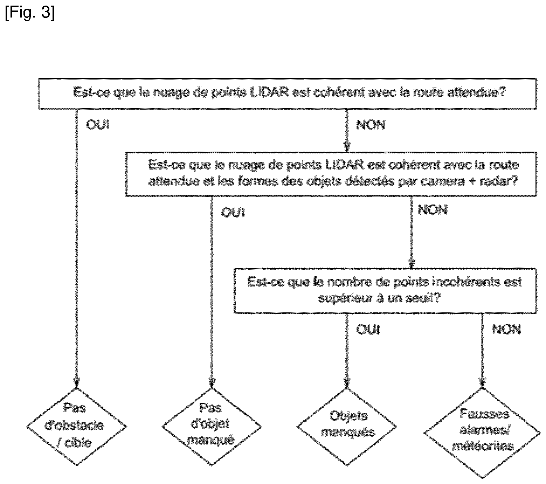

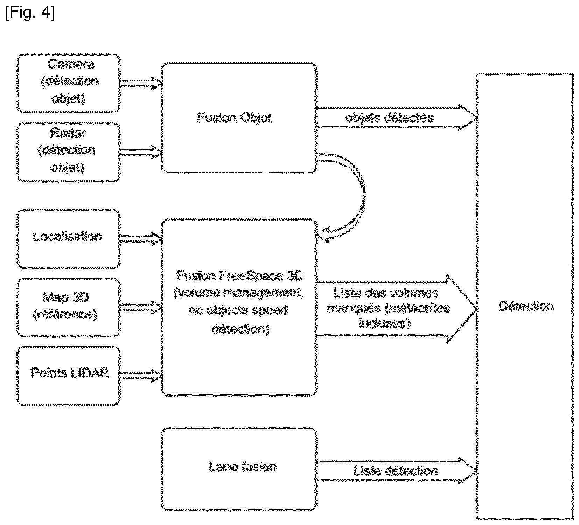

Afin d'évaluer une quelconque incohérence entre les mesures des capteurs et la carte 3D, l'invention propose une logique de traitement illustrée par les figures 3 et 4, qui détecte les objets manqués par les capteurs classiques, tout en s'affranchissant des fausses détections.

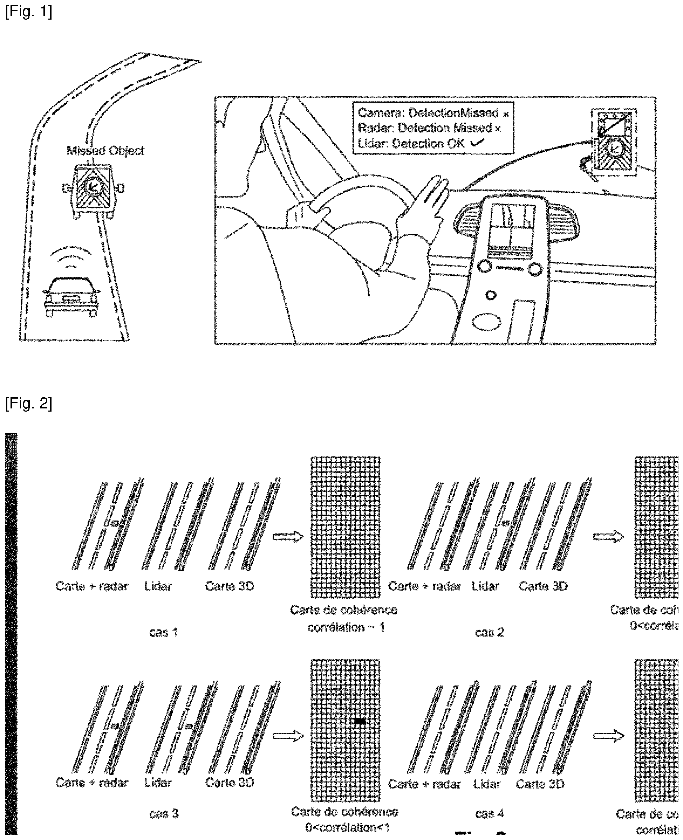

Si l'on considère l'un des buts essentiels de cette invention, à savoir utiliser la carte 3D et le lidar comme aide pour la détection d'obstacle, nous pouvons résumer les différentes situations rencontrées dans le tableau 1 suivant, qui reprend les cas illustrés par la figure 2.

[Tableau 1]

| | Détection | | | |
|---|---|---|---|---|
| Capteurs | Cas 1 | Cas 2 | Cas 3 | Cas 4 |
| Caméra + Radar | Objets détectés | Pas d'objets détectés | Objets détectés | Pas d'objets détectés |
| Lidar | Nuage de points | Nuage de points + objets | Nuage de points + objets | Nuage de points |

(suite)

| | Détection | | | |
|---|---|---|---|---|
| Capteurs | Cas 1 | Cas 2 | Cas 3 | Cas 4 |
| Comparaison avec la carte 3D (+ niveau de corrélation associé) | Cohérence avec la carte & $X_1$ | Il existe une incohérence entre la carte et le nuage lidar & $X_2$ | Cohérence avec la carte & $X_3$ | Cohérence avec la carte & $X_4$ |
| Conclusion | Présence d'objet en fonction de la valeur de $X_1$ | Présence d'objet en fonction de la valeur de $X_2$ | Présence d'objet en fonction de la valeur de $X_3$ | Présence d'objet en fonction de la valeur de $X_4$ |

Il est important de rappeler que les capteurs de type caméra et radar renvoient des objets et non des données bruts. Concernant le lidar, nous considérons qu'il renvoie quant à lui des données brutes. Nous disposons ainsi des nuages de points bruts renvoyés par le capteur directement. Par ailleurs, on considère ici que l'erreur de localisation du véhicule est maitrisée et connue. Nous pouvons décrire les cas suivants :

Cas°1 / Caméra + Radar : « objets détectés » signifie que la caméra et le radar ont tous les deux détecté des objets présents dans la scène. A ce stade, on ne sait pas si ces détections sont pertinentes ou pas, il peut s'agir de fausses détection de type « ghost », telle que celles présentées dans le cas du camion de service décrit auparavant.

Cas°1 / Lidar : « nuage de points » signifie que, comme nous l'avons mentionné auparavant, le lidar est un capteur qui permet de créer des nuages de points de l'environnement dans lequel il évolue. A ce stade, celui-ci renvoie un nuage, mais pas d'objets.

Cas°1 / Comparaison avec la carte 3D : dans ce cas on peut s'attendre à ce que la comparaison entre le nuage de point donné par le lidar et la carte 3D soit cohérente. C'est-à-dire que la différence entre ces deux informations est proche de zéro. Cependant, il est nécessaire de contrôler cela avec un niveau de corrélation. Une carte de cohérence peut permettre d'illustrer géographiquement l'absence d'incohérence.

Cas°1 / Conclusion : dans ce cas on considère qu'on s'attend à ce qu'il n'y ait en réalité pas d'objet sur la route, qu'il s'agit de « fausses » détections issues de la fusion entre le radar et la caméra. En effet, lors de la comparaison entre la carte 3D et le lidar, on compare plusieurs milliers de points 3D (capacité de mesure du lidar : 300'000 points / seconde) avec une carte 3D très résolue. On estime donc que la corrélation entre ces deux éléments très résolus ne peut pas être fausse en tout point du nuage et de la carte. Ainsi, un niveau de corrélation élevé ne peut résulter d'une erreur de mesure du lidar (lui-même composé de plusieurs organes de mesures).

Cas°2 / Caméra + radar : « pas d'objet détecté » signifie que ni la caméra ni le radar n'ont détecté d'objet, ou que la fusion des mesures des deux capteurs ne renvoie pas d'objet.

Cas°2 / Lidar : « nuage de points + objets » signifie que le lidar renvoie un nuage de points, et à partir de celui-ci, un ou des objets ont pu être détectés.

Cas°2 / Comparaison avec la carte 3D : il existe une incohérence entre la carte 3D et les données issues du lidar. Comme précédemment, nous estimons également un niveau de corrélation entre les données issues du lidar et la carte 3D. La valeur de ce niveau de corrélation va donc nous informer sur la présence ou non d'objets. Une carte de cohérence, ou d'incohérence dans le cas présent, peut permettre de repérer géographiquement les incohérences.

Cas°2 / Conclusion : comme présenté précédemment, nous savons que les sources d'incohérence peuvent apparaitre à cause de différents phénomènes. Par conséquent en fonction de ces différents phénomènes, et de la valeur du niveau de corrélation, nous serons en mesure de conclure sur la présence effective d'objets ou pas.

Cas°3 / Caméra + radar : on se retrouve dans le même cas de figure que le premier cas présenté, à savoir que la caméra, le radar et/ou la fusion de ces deux sources a ou ont détecté un objet.

Cas°3 / Lidar : « nuage de points + objets » signifie que le lidar renvoie un nuage de points, et à partir de celui-ci un ou des objets ont pu être détectés.

Cas°3 / Comparaison avec la carte 3D : les objets détectés par les différents capteurs sont directement « ajoutés » à la carte, notamment grâce au fait que l'on connait la position du véhicule dans la carte. On réalise alors notre opération de comparaison afin de déterminer le niveau de corrélation. De même, une carte de cohérence, ou d'incohérence, peut permettre de repérer géographiquement les incohérences.

Cas°3 / Conclusion : comme présenté précédemment, nous savons que les sources d'incohérence peuvent apparaitre à cause de différents phénomènes. Par conséquent en fonction de ces différents phénomènes, et de la valeur du niveau de corrélation, nous serons en mesure de conclure sur la présence effective d'objets ou pas.

Cas°4 / Caméra + radar : dans ce cas, ni le radar ni la caméra, ni la fusion des deux, ne renvoient d'objets.

Cas°4 / Lidar : comme dans le premier cas, le lidar renvoie ici un nuage de points.

Cas°4 / Comparaison avec la carte 3D : à nouveau, nous comparons les données issues des capteurs et la carte 3D afin de déterminer un niveau de corrélation. Là aussi, une carte de cohérence peut permettre d'illustrer géographiquement l'absence d'incohérence.

Cas°4 / Conclusion : dans ce cas de figure, on s'attend à ce que le niveau de corrélation soit élevé, ce qui signifierait une absence d'objet.

Comme illustré dans la figure 2, représentant les différents cas évoqués dans le tableau ci-dessus, une carte de cohérence peut être établie. Elle sert également à positionner les différents objets qui pourraient être détectés.

Les figures 3 et 4 illustrent respectivement un exemple d'algorithme et un exemple d'architecture logicielle mettant en oeuvre l'invention.

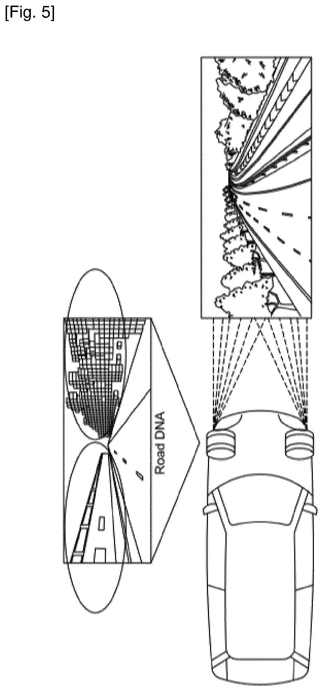

Comme illustré par la figure 5, dans un mode de réalisation avantageux, deux lidars peuvent permettent d'obtenir deux nuages de points avec des perspectives différentes et ainsi robustifier la fonction. L'utilisation de plusieurs lidars pour réaliser l'invention présentée a plusieurs avantages. Cela permet de rendre le calcul de corrélation plus fiable. Par ailleurs cela présente l'avantage de permettre un moyen de contrôle de bonne santé de chacun des lidars. En effet, il est possible de comparer chacune de leur mesure. Dans le présent exemple de réalisation, « Road DNA » (marque déposée) désigne une base cartographique très haute résolution commercialisée par TomTom (Marque Déposée).

Dans un mode de réalisation simplifié mais avantageux visant à limiter tant la charge du calculateur que l'espace mémoire alloué, on peut réaliser les mêmes traitements selon l'invention en utilisant seulement une cartographie 2D. Dans ce cas, les objets cartographiés sont les éléments de signalisation horizontale, communément appelé « lignes blanches » ou simplement « lignes ». En effet, comme nous l'avons présenté auparavant, les lidars mesurent une distance mais ont aussi la capacité de relever le niveau de réflectivité des objets. Par nature, les marquages (lignes, flèches, etc....) sont très réfléchissants et sont donc détectables grâce aux données issues des lidars. Ainsi, dès lors qu'une ligne ou une portion de ligne cartographiée n'est pas vue par les lidars et qu'aucun objet n'a été détecté, ces mêmes traitements utilisant un niveau de corrélation selon l'invention, très peu coûteux, peuvent permettre de détecter des objets supplémentaires, qui n'avaient pas été détectés par les caméras et les radars, comme par exemple un véhicule de service portant un panneau de signalisation, dès lors que celui-ci masque une ligne horizontale.

Dans ce mode de réalisation en 2D, il peut être avantageux de sécuriser les non-détections de lignes par les lidars, afin de ne pas être leurré dans les cas où une ligne ou une portion de ligne n'est pas simplement masquée par un objet, mais carrément effacée. Il semble alors opportun d'utiliser plusieurs capteurs afin de les redonder. Dans le cas d'une détection de dégradation de l'infrastructure (ligne effacée, etc....) on pourra alors profiter des installations « Vehicle-to-vehicle » (V2V) ou « Vehicle-to-Infrastructure » (V2I) afin de renvoyer des messages vers un serveur de base de données hébergé dans le « cloud » selon la terminologie anglo-saxonne. Si des messages s'accumulent au-delà d'un seuil prédéfini au niveau du serveur, celui-ci peut alors alerter sur une problématique de fraicheur de la carte à cet endroit et diffuser un message à l'intention des véhicules, toujours par l'intermédiaire de connexions V2V ou V2I, ou encore déclencher les actions nécessaires à la mise à jour de la carte.

La présente invention peut également être utile afin de déduire les éventuels dysfonctionnements d'un capteur lidar. En effet, il est possible de comptabiliser les incohérences dans une zone donnée de la carte d'incohérence décrite précédemment, puis de fixer des seuils à partir desquels on considère que l'incohérence est due à un dysfonctionnement du capteur, qu'il s'agisse du dysfonctionnement d'un élément matériel constituant une partie physique du capteur ou qu'il s'agisse du dysfonctionnement d'un élément logiciel constituant une partie des post-traitements exécutés sur les mesures prises par le capteur afin de de détecter des objets.

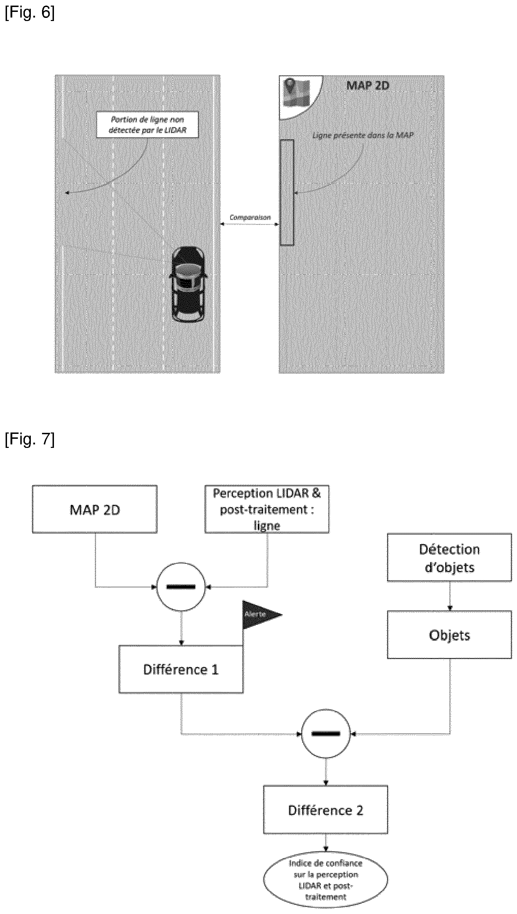

Toutefois, avant de tenter de détecter des erreurs dans les mesures prises par le lidar, ces mesures pouvant notamment porter sur une ligne de marquage au sol comme illustré à la figure 6, et d'en déduire d'éventuels dysfonctionnements du capteur lidar, il faut d'abord s'assurer que la ligne n'est pas masquée par un objet sur la voie ou encore qu'elle n'est pas tout simplement effacée, auxquels cas il ne s'agit pas d'erreurs. Le défi à relever est donc d'identifier la cause d'une différence entre une image perçue par un système de perception lidar, illustrée à gauche sur la figure 6 où une portion de ligne n'est pas détectée, et une image issue d'une base de données cartographique MAP2D, illustrée à droite sur la figure 6 où la même ligne est décrite comme ne comportant pas de discontinuité.

Comme illustré à la figure 7, on peut comparer les détections issues des post-traitements du lidar (« Perception LIDAR & Post-traitement : ligne ») aux données de cartographie MAP2D et constater des différences, notamment « Différence 1 ». A ce stade où le lidar ne voit pas la même chose que ce qui est prévu dans la cartographie, on ne peut pas encore conclure quant à l'origine de cette différence, une simple alerte est donc levée indiquant que l'acquisition actuelle par le lidar (acquisition et post-traitements) n'est pas conforme à la base de données cartographiques. En effet, la différence peut être due à un objet masquant ou à une ligne effacée, et on ne peut pas encore conclure à une erreur due à un dysfonctionnement logiciel ou à un dysfonctionnement matériel du lidar.

Si la ligne est absente dans l'acquisition actuelle par le lidar, mais qu'au moins un objet (« Objets ») a été détecté dans la zone correspondante par le bloc de détection d'objets (« Détection d'objets »), alors la présence de l'objet est confirmée et on peut considérer que l'absence de détection du lidar est cohérente. Par contre, si la ligne est absente dans l'acquisition actuelle par le lidar mais qu'aucun objet n'a été détecté dans la zone correspondante par le bloc de détection d'objets, alors on peut constater une différence (« Différence 2 »), qui peut révéler soit un problème d'effacement de ligne, soit un dysfonctionnement logiciel ou matériel du capteur. On peut alors assigner aux données d'acquisition actuelle par le lidar un niveau de confiance, que l'on peut initialiser à 1 (niveau maximal de confiance, car on ne sait pas encore s'il y a dysfonctionnement du capteur) et susceptible de varier ultérieurement entre 1 et 0 (niveau minimal de confiance correspondant à un dysfonctionnement avéré).

Il s'agit donc maintenant de tenter de détecter un effacement de ligne qui n'aurait pas été reporté dans la cartographie MAP2D.

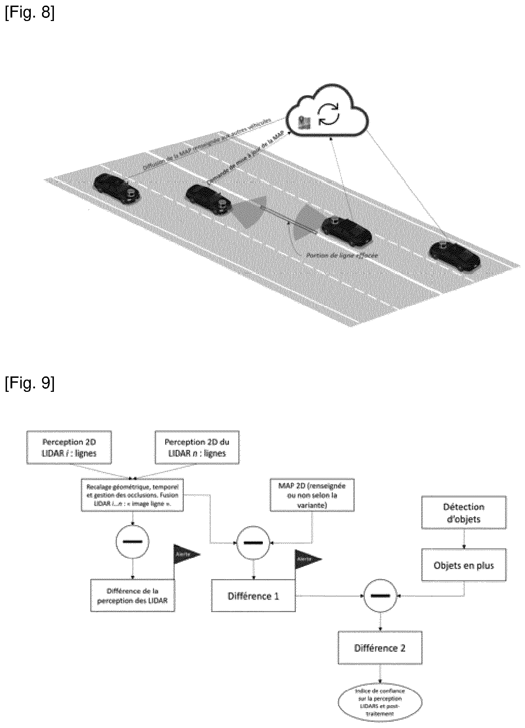

Un premier moyen pour détecter les effacements de ligne, c'est d'utiliser une cartographie mise-à-jour systématiquement via les informations V2V ou V2X, indiquant les effacements de ligne, ainsi que tout problème réellement constaté sur la route. Le procédé illustré par la figure 8 est basé sur la redondance d'informations de l'ensemble des véhicules environnants. On considère que chaque véhicule dispose d'un unique capteur lidar : dès lors qu'un véhicule détecte une anomalie de route (comme une ligne effacée), il fait remonter l'information à la base de données cartographique par le biais d'une alerte. Dès lors que la base de données, stockée dans un « cloud » selon la terminologie anglo-saxonne, reçoit un nombre d'alerte supérieur à un seuil donné, alors l'information est considérée comme vraie et la cartographie est mise à jour et transmise aux autres véhicules. La suite du traitement s'effectue alors selon l'organigramme de la figure 9. En plus de résoudre le cas particulier d'une ligne effacée dans une approche de détection, cette méthode a pour avantage supplémentaire de permettre de partage d'autres informations, comme des trous dans la route, etc. Ainsi la cartographie peut être mise à jour en temps réel et informer les utilisateurs de divers évènements.

Un moyen supplémentaire pour détecter les effacements de ligne, c'est de multiplier les capteurs lidars, afin d'obtenir une information avec un indice de confiance consolidé, comme illustré à la figure 9 pour n capteurs de type lidar, ou n entier strictement positif, capables de percevoir en 2D les lignes de marquage au sol. La logique générale de cette figure est globalement identique à celle de la figure 7, sauf en ce qui concerne des étapes de pré-traitement des nuages de points lidar, notamment des étapes de recalage géométrique et temporel, ainsi que de fusion, qui sont décrites ci-après (et illustrées dans un même bloc de la figure 9).

Même si les n LIDAR n'ont pas la même position sur la voiture, les nuages de points qu'ils fournissent en sortie doivent toutefois être exprimés dans un même référentiel lié au véhicule. Cela est réalisé durant une étape de recalage géométrique qui permet d'exprimer tous les nuages de points par rapport à un même point origine à bord, le milieu du véhicule par exemple. De plus, les références de temps capteurs n'étant pas forcément les mêmes pour les n lidars, une synchronisation temporelle des nuages de points doit par conséquent être réalisée durant une étape de récalage temporel, qui permet de les dater à un même instant. Une étape de fusion permet de superposer les n nuages de points recalés géométriquement et temporellement. Si à la fin de la comparaison une différence (appelée différence 2) persiste, alors l'intégrité des capteurs ou de leur post-traitement est mise en cause.

Avec n lidars sur un véhicule où n>0, on acquiert un nuage de points de chaque lidar. Les n nuages de points peuvent être ramenés dans un référentiel lié au véhicule. Cette transformation peut générer une légère incohérence sur les coordonnées des points. Puis, on peut superposer le nuage de points mesuré avec la cartographie pour constater les incohérences. Avec la cartographie ou une centrale inertielle pour mesurer l'incohérence entre les coordonnées de la mesure du point qui fait partie du nuage de points acquis et les coordonnées du point de référence sur la cartographie par exemple. Dans le cas d'une incohérence géométrique, un point de référence est déterminé avec la cartographie, un système de positionnement de type GPS et une centrale inertielle. Puis, l'incohérence entre les coordonnées de la mesure du point (qui fait partie du nuage de points acquis) et les coordonnées du point de référence sur la carte peut être mesurée et, si l'on veut corriger l'incohérence, il faut trouver la fonction de transfert F, comme explicité par la suite.

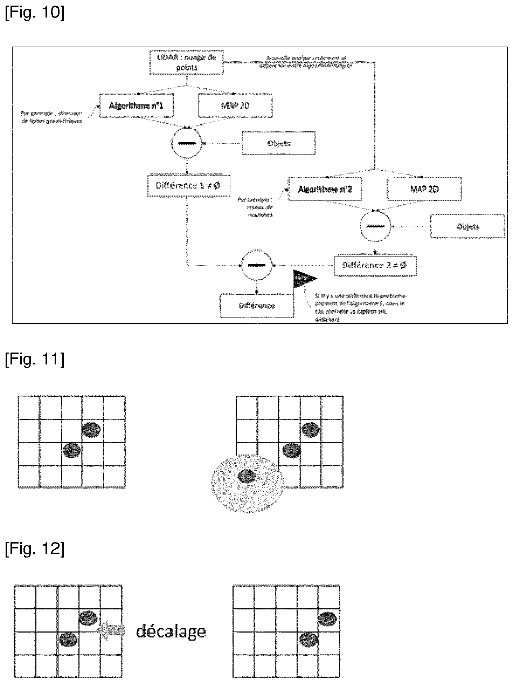

En l'absence d'effacement de ligne, le dysfonctionnement du capteur est donc finalement avéré, et on peut encore faire la différence entre dysfonctionnement matériel et dysfonctionnement logiciel, comme illustré à la figure 10.

Pour analyser le dysfonctionnement dans ce cadre, il peut être opportun de se baser sur la perception des lignes de marquage au sol, dont on vient justement de conclure qu'ils sont mal perçus par le lidar. De plus, ces lignes sont a *priori* faciles à percevoir et elles représentent moins de données à traiter et stocker en 2 dimensions.

La figure 10 illustre un procédé pour faire la différence entre un défaut capteur et un défaut du post-traitement. Le capteur fait l'acquisition d'un nuage de points qui est analysé pour extraire les caractéristiques géométriques avec un Algorithme n°1, puis celles-ci sont comparées avec la MAP2D et avec les objets détectés dans le plan. L'Algorithme n°1 est par exemple du type « rule-based point cloud 2D shaping » selon la terminolgioe anglo-saxonne. Si à l'issue de cette comparaison, il y a une différence (différence 1 $\neq \varnothing$), alors le même nuage de points est traité par un Algorithme n°2. L'Algorithme n°2 est par exemple du type « convolutional neuronal network » ou CNN selon la terminologie anglo-saxonne. Le résultat de cette analyse est également comparé avec la MAP2D et les objets détectés dans le plan. Si une différence est constatée (différence 2 $\neq \varnothing$), celle-ci est comparée avec la première différence. Si les deux différences sont les mêmes, alors le capteur est en cause. Si les deux différences ne sont pas les mêmes, alors l'algorithme est en cause.

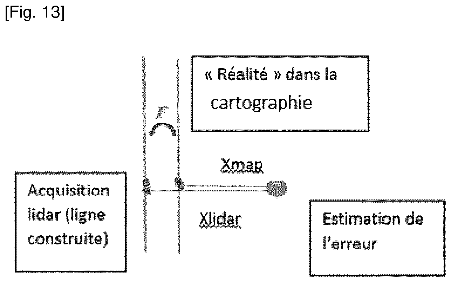

Pour définir la mesure d'incohérence entre le nuage de points lidar et la cartographie, plusieurs méthodes sont possibles : comparaison sur grilles comme illustré aux figures 11 et 12 (méthode plus adaptée à la détection d'objet) ou comparaison suivie d'un calcul de fonction de transfert F comme illustré à la figure 13.

Les figures 11, 12 illustrent la méthode de comparaison sur grilles, une première grille à gauche sur les figures 11 et 12 étant superposée à l'image formée par le nuage de points lidar, une deuxième grille à droite sur les figures 11 et 12 étant superposée à la cartographie. Un tel système de grilles permet d'estimer une valeur de corrélation variant de 1 à 0 entre le nuage de points lidar et les données cartographiques. On définit ensuite une fonction de transfert F pour estimer l'erreur. On peut ensuite fixer des seuils qui définissent l'incohérence des mesures, c'est-à-dire à partir de combien de comparaisons et à partir de combien de non-corrélations de points sur une grille on considère qu'il y a incohérence, chaque point de la grille étant assimilable à un pixel. On peut aussi fixer des seuils d'incohérence au-delà desquels on considère que le lidar n'est pas intègre/fiable.

La méthode de comparaison sur grilles consiste notamment à estimer la différence entre l'union des points mesurés et des points réels et l'intersection des nuages de points mesurés issus des capteurs et des nuages de points réels issus de la cartographie (i.e. calculer la différence « union - intersection »). On obtient un ensemble de points restants et on calcule un volume V appelé « volume d'erreur » défini comme le volume de l'enveloppe desdits points restants, par exemple le volume de la plus petite sphère contenant tous ces points restants. Ce volume est mémorisé pour calculer l'indice de confiance ultérieurement. Afin de traiter une erreur plus représentative, on peut normaliser ce volume d'erreur sur un échantillon des derniers volumes de l'erreur du même capteur sur une fenêtre temporelle prédéterminée : il s'agit de calculer la moyenne Vm de tous ces volumes de l'erreur sur la fenêtre temporelle et de déterminer l'écart-type $\sigma$ de ces volumes. Puis, on considère le volume moyen de l'erreur Vnorm=(V-Vm)/$\sigma$ dans la suite des traitements, appelé par la suite « volume d'erreur normalisé ». L'indice de confiance vise à exclure les capteurs présentant un volume d'erreur ou un volume d'erreur normalisé supérieur à un seuil prédéterminé, par exemple 10 litres, ou présentant une erreur géométrique supérieure à un seuil prédéterminé, par exemple 40 centimètres, ou encore présentant une combinaison de ces deux erreurs. Pour cela, à partir des volumes normalisés, on calcule des volumes relatifs de l'erreur par rapport aux seuil prédéterminés (10 litres ou 40 centimètres dans le présent exemple, qui représentent chacun la référence égale à 1) et l'indice de confiance est calculé de la manière suivante :

$$Volume\ relatif\ de\ l'erreur = volume\ normalisé\ de\ l'erreur\ /\ 10$$

$$Erreur\ géométrique\ relative = erreur\ géométrique\ normalisée/\ 40$$

$$Indice = 1 - Volume\ relatif\ de\ l'erreur - erreur\ géométrique\ relative$$

$$si\ Indice <= 0\ alors\ Indice\ de\ confiance = 0$$

$$sinon\ Indice\ de\ confiance = Indice$$

S'il s'agit d'une comparaison entre nuage de points 2D et une cartographie 2D, l'erreur peut avoir la forme d'une aire. Dans ce cas, l'indice de confiance peut viser à exclure les capteurs présentant une aire d'erreur ou une aire d'erreur normalisée supérieure à un seuil prédéterminé, par exemple 100 centimètres carrés (cm$^2$), ou présentant une erreur géométrique supérieure à un seuil prédéterminé, par exemple 40 centimètres, ou encore présentant une combinaison de ces deux erreurs. Pour cela, à partir des aires normalisées, on calcule des aires relatives de l'erreur par rapport aux seuil prédéterminés (100 cm$^2$ ou 40 centimètres dans le présent exemple, qui représentent chacun la référence égale à 1) et l'indice de confiance est calculé de la manière suivante :

$$Aire\ relative\ de\ l'erreur = aire\ normalisée\ de\ l'erreur\ /\ 100$$

$$Erreur\ géométrique\ relative = erreur\ géométrique\ normalisée/\ 40$$

$$Indice = 1 - Aire\ relative\ de\ l'erreur - erreur\ géométrique\ relative$$

*si Indice <= 0 alors Indice de confiance = 0*

*sinon Indice de confiance = Indice*

S'il n'y a aucune cohérence entre nuage de points et cartographie, (i.e. niveau de corrélation nul), alors le capteur peut être considéré comme défectueux. On peut répéter les comparaisons de chaque point de la grille à des moments différents. On peut utiliser des non-corrélations récurrentes, c'est-à-dire de certains points particuliers, pour constater qu'il y a un problème. Par exemple, la présence de gouttelettes devant le lidar peut entraîner l'obstruction récurrente des mêmes points.

Comme illustré par la figure 11, après la comparaison du nuage de points lidar et de la cartographie (pixel(xli, yli) - pixel(xmi,ymi)), le point en bas à gauche est différent (D= pixel(l1,l1)-pixel(m1,m1)=-1). Si l'incohérence est toujours à cet endroit pour n moments, une défaillance est avérée pour cet endroit.

Comme illustré par la figure 12, en comparant le nuage de points lidar avec la cartographie, on peut constater un décalage. On peut alors calculer une fonction de transfert F, particulièrement adaptée à la localisation. Un décalage du nuage de points par rapport à la cartographie peut aussi être déterminé à partir des lignes de marquage au sol, connues non seulement de la cartographie, mais également acquises par le capteur.

Comme illustré par la figure 13, chaque point du nuage de points lidar, qui forme ici une ligne, peut être comparé à un point de la ligne de marquage sur la cartographie. Pour n points de la ligne où n>0, une fonction de transfert F peut ainsi être calculée entre son image Xlidar dans le nuage de points et sa représentation Xmap dans la cartographie. On peut comparer les n fonctions de transfert pour rechercher un éventuel élément récurrent, comme un décalage commun selon une direction x. On peut aussi convertir les points dans des coordonnées radiales (r et phi) puis vérifier s'il y a un décalalge commun en r et/ou en phi. Pour n points en coordonnées radiales, on peut aussi calculer une fonction de transfert et on peut également rechercher un élément récurrent pour corriger les acquisitions. On peut alors recaler le capteur lidar.

L'invention décrite précédemment a encore pour principal avantage, outre l'amélioration de la robustesse de détection des cibles et des espaces libres, d'être relativement peu gourmande en besoins de traitement compte-tenu des capacités de calcul actuelles, dès lors que l'on parvient à compresser la cartographie avec une échelle raisonnable. Avec un lidar, une très bonne détection est obtenue en 2D, ce qui est beaucoup plus léger en traitement et stockage de données par rapport à la 3D.

## Revendications

**1.** [Procédé pour diagnostiquer le dysfonctionnement d'un capteur, le procédé comportant une étape de comparaison de données de détections d'objets fournies par le capteur dans une zone géographique avec des données cartographiques correspondant à ladite zone, le procédé étant **caractérisé en ce que**, si les données de détections et les données cartographiques sont incohérentes, notamment si des objets détectés par le capteur ne sont pas représentés dans la cartographie ou que des objets représentés dans la cartographie ne sont pas détectés par le capteur, alors le procédé comporte en outre :

- une étape de vérification qu'un objet a été détecté ou pas dans ladite zone par d'autres capteurs ;
- si aucun objet n'a été détecté dans la zone par d'autres capteurs, une étape d'assignation d'un indice de confiance aux données de détections.

**2.** Procédé selon la revendication 1, **caractérisé en ce que** l'étape d'assignation d'un indice de confiance aux données de détections comporte :

- une sous-étape d'identification des points incohérents dans la zone ;
- une sous-étape de quantification de l'incohérence pour chacun de ces points et ;
- - en cas d'incohérence au-delà d'un seuil prédéfini, une sous-étape de diminution de l'indice de confiance sur les données de détection.

**3.** Procédé selon la revendication 2, **caractérisé en ce que**, le capteur étant de type lidar ou caméra apte à détecter des lignes de marquage au sol, les données cartographiques sont mises à jour régulièrement tout au long de la mise en oeuvre dudit procédé, incluant les données représentant des portions effacées des lignes de marquage au sol

**4.** Procédé selon la revendication 3, **caractérisé en ce que** les données de détection sont fusionnées avec des données de détection fournies par d'autres capteurs de type lidar ou caméra, de manière à consolider l'indice de confiance sur lesdites données, incluant les données représentant les lignes de marquage au sol.

**5.** Procédé selon la revendication 2 et 4, **caractérisé en ce que** la sous-étape d'identification des points incohérents inclut de recaler géométriquement et temporellement les points issus de différents capteurs.

**6.** Procédé selon la revendication 2, **caractérisé en ce que** la sous-étape de quantification de l'incohérence inclut d'estimer un volume d'erreur égal au volume d'une enveloppe spatiale contenant la différence entre :

- l'union des points détectés par les capteurs et des points réels connus de la cartographie et ;
- - l'intersection des points détectés par les capteurs et des points réels connus de la cartographie.

**7.** Procédé selon la revendication 6, **caractérisé en ce que** le volume d'erreur est normalisé par rapport aux volumes de l'erreur calculés précédemment sur une fenêtre temporelle prédéterminée.

**8.** Procédé selon l'une des revendications 6 ou 7, **caractérisé en ce que** la sous-étape de diminution de l'indice de confiance sur les données de détection inclut de calculer un volume relatif d'erreur par rapport à un seuil de volume prédéterminé et de calculer une erreur géométrique relative par rapport à un seuil de distance prédéterminé, l'indice de confiance étant obtenu en soustrayant à la valeur 1 ledit volume relatif et ladite erreur géométrique relative.

**9.** Système comportant des moyens matériels et logiciels pour mettre en oeuvre l'une quelconque des revendications précédentes.

**Patentansprüche**

**1.** Verfahren zum Diagnostizieren der Funktionsstörung eines Sensors, wobei das Verfahren einen Schritt des Vergleichens von Objektdetektionsdaten, die von dem Sensor in einem geografischen Bereich bereitgestellt werden, mit kartografischen Daten, die dem Bereich entsprechen, umfasst, wobei das Verfahren **dadurch gekennzeichnet ist, dass**, wenn die Detektionsdaten und die kartografischen Daten inkohärent sind, insbesondere wenn von dem Sensor detektierte Objekte in der Kartografie nicht dargestellt sind oder wenn in der Kartografie dargestellte Objekte nicht von dem Sensor detektiert werden, das Verfahren dann ferner umfasst:

- einen Schritt des Überprüfens, ob ein Objekt in dem Bereich von anderen Sensoren detektiert worden ist oder nicht;
- wenn kein Objekt in dem Bereich von anderen Sensoren detektiert worden ist, einen Schritt des Zuweisens eines Konfidenzindex zu den Detektionsdaten.

**2.** Verfahren nach Anspruch 1, **dadurch gekennzeichnet, dass** der Schritt des Zuweisens eines Konfidenzindex zu den Detektionsdaten umfasst:

- einen Teilschritt des Identifizierens der inkohärenten Punkte in dem Bereich;
- einen Teilschritt des Quantifizierens der Inkohärenz für jeden dieser Punkte und;

- - im Fall einer Inkohärenz über einen vorgegebenen Schwellenwert hinaus, einen Teilschritt des Verringerns des Konfidenzindex für die Detektionsdaten.

**3.** Verfahren nach Anspruch 2, **dadurch gekennzeichnet, dass**, wenn der Sensor vom Typ Lidar oder Kamera ist und geeignet ist, Bodenmarkierungslinien zu detektieren, die kartografischen Daten während der gesamten Durchführung des Verfahrens aktualisiert werden, einschließlich der Daten, die gelöschte Abschnitte der Bodenmarkierungslinien darstellen.

**4.** Verfahren nach Anspruch 3, **dadurch gekennzeichnet, dass** die Detektionsdaten mit Detektionsdaten, die von anderen Sensoren vom Typ Lidar oder Kamera bereitgestellt werden, zusammengeführt werden, so dass der Konfidenzindex für die Daten konsolidiert wird, einschließlich der Daten, die die Bodenmarkierungslinien darstellen.

**5.** Verfahren nach Anspruch 2 und 4, **dadurch gekennzeichnet, dass** der Teilschritt des Identifizierens der inkohärenten Punkte einschließt, dass die aus verschiedenen Sensoren hervorgegangenen Punkte geometrisch und zeitlich neu eingestellt werden.

6. Verfahren nach Anspruch 2, **dadurch gekennzeichnet, dass** der Teilschritt des Quantifizierens der Inkohärenz beinhaltet, dass ein Fehlervolumen gleich dem Volumen einer räumlichen Hülle geschätzt wird, die die Differenz enthält zwischen

   - der Vereinigungsmenge der von den Sensoren detektierten Punkte und der aus der Kartografie bekannten realen Punkte und;

   - - der Schnittmenge der von den Sensoren detektierten Punkte und der aus der Kartografie bekannten realen Punkte.

7. Verfahren nach Anspruch 6, **dadurch gekennzeichnet, dass** das Fehlervolumen in Bezug auf die zuvor über ein vorbestimmtes Zeitfenster berechneten Volumina des Fehlers standardisiert wird.

8. Verfahren nach einem der Ansprüche 6 oder 7, **dadurch gekennzeichnet, dass** der Teilschritt des Verringerns des Konfidenzindex für die Detektionsdaten beinhaltet, das ein relatives Fehlervolumen in Bezug auf einen vorbestimmten Volumenschwellenwert berechnet wird und ein relativer geometrischer Fehler in Bezug auf einen vorbestimmten Abstandsschwellenwert berechnet wird, wobei der Konfidenzindex erhalten wird, indem von dem Wert 1 das relative Volumen und der relative geometrische Fehler subtrahiert werden.

9. System, das Hardware- und Softwaremittel zur Umsetzung eines der vorhergehenden Ansprüche umfasst.

**Claims**

1. Method for diagnosing malfunction of a sensor, the method comprising a step of comparing object-detection data delivered by the sensor in a geographical region with map data corresponding to said region, the method being **characterized in that**, if the detection data and the map data are inconsistent, and in particular if objects detected by the sensor are not represented in the map or if objects represented in the map are not detected by the sensor, then the method further comprises:

   - a step of verifying whether or not an object has been detected in said region by other sensors;
   - if no object has been detected in the region by other sensors, a step of assigning an index of confidence to the detection data.

2. Method according to Claim 1, **characterized in that** the step of assigning an index of confidence to the detection data comprises:

   - a sub-step of identifying inconsistent points in the region;
   - a sub-step of quantifying inconsistency for each of these points; and
   - in case of inconsistency beyond a predefined threshold, a sub-step of decreasing the index of confidence in the detection data.

3. Method according to Claim 2, **characterized in that**, the sensor being a lidar or camera able to detect road line markings, the map data are regularly updated throughout implementation of said method, these data including data representing erased segments of road line markings.

4. Method according to Claim 3, **characterized in that** the detection data are fused with detection data delivered by other lidars or cameras, so as to consolidate the index of confidence in said data, these data including data representing road line markings.

5. Method according to Claims 2 and 4, **characterized in that** the sub-step of identifying inconsistent points includes bringing the points delivered by various sensors into geometrical and temporal alignment.

6. Method according to Claim 2, **characterized in that** the sub-step of quantifying inconsistency includes estimating an error volume equal to the volume of a spatial envelope containing the difference between:

- the union of the points detected by the sensors and of the known real points of the map; and
- the intersection of the points detected by the sensors and of the known real points of the map.

7. Method according to Claim 6, **characterized in that** the error volume is normalized with respect to error volumes computed beforehand in a predetermined time window.

8. Method according to either of Claims 6 and 7, **characterized in that** the sub-step of decreasing the index of confidence in the detection data includes computing a relative error volume with respect to a predetermined volume threshold and computing a relative geometric error with respect to a predetermined distance threshold, the index of confidence being obtained by subtracting said relative volume and said relative geometric error from the value 1.

9. System comprising hardware and software means for implementing any one of the preceding claims.

[Fig. 1]

Missed Object

Camera: DetectionMissed ×
Radar: Detection Missed ×
Lidar: Detection OK ✓

[Fig. 2]

Carte + radar    Lidar    Carte 3D

Carte de cohérence
corrélation ~ 1

cas 1

Carte + radar    Lidar    Carte 3D

Carte de coh
0<corréla

cas 2

Carte + radar    Lidar    Carte 3D

Carte de cohérence
0<corrélation<1

cas 3

Carte + radar    Lidar    Carte 3D

Carte de co
corrélati

cas 4

[Fig. 3]

Est-ce que le nuage de points LIDAR est cohérent avec la route attendue?

OUI

NON

Est-ce que le nuage de points LIDAR est cohérent avec la route attendue et les formes des objets détectés par camera + radar?

OUI

NON

Est-ce que le nombre de points incohérents est supérieur à un seuil?

OUI

NON

Pas d'obstacle / cible

Pas d'objet manqué

Objets manqués

Fausses alarmes/ météorites

[Fig. 4]

[Fig. 5]

[Fig. 6]

[Fig. 7]

[Fig. 8]

[Fig. 9]

[Fig. 10]

[Fig. 11]

[Fig. 12]

décalage

[Fig. 13]

Acquisition lidar (ligne construite)

« Réalité » dans la cartographie

Xmap

Xlidar

Estimation de l'erreur

*F*

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 1852188
- KR 20160128077
- US 2019196481 A1